# EUROPEAN PATENT APPLICATION

(11) **EP 4 640 382 A1**
(43) Date of publication of application: **29.10.2025**
(21) Application number: 24172582.9
(22) Date of filing: 25.04.2024
(51) Int. Cl.: B25J 19/00, G09F 9/30, F16L 3/08

(54) **MOUNTING MODULE**

(71) Applicant: Vrije Universiteit Brussel, 1050 Brussel (BE); Imec VZW, 3001 Leuven (BE)
(72) Inventor: SCHOLZ, Constantin, 3001 Leuven (BE); IMRITH, Emil, 3001 Leuven (BE); VANDERBORGHT, Bram, 3001 Leuven (BE); CAO, Hoang Long, 3001 Leuven (BE); GERETS, Peter, 3001 Leuven (BE); ROTTENBERG, Xavier, 3001 Leuven (BE); CHEYNS, David, 3001 Leuven (BE); FIROUZIPOUYAEI, Hamed, 3001 Leuven (BE); SISAVATH, Dylan, 3001 Leuven (BE)
(74) Representative: Winger

(57) **Abstract**

A mounting module for attaching to a curved object includes a flexible upper substrate and a plurality of supporting elements. Each supporting element comprises at least one foot and one leg connecting the foot with the flexible upper substrate. The mounting module is adaptable to the curvature of the curved object while maintaining the dimensions of the flexible upper substrate consistent across its surface. The supporting elements adjust their alignment during adaptation of the mounting module to the curvature of the curved object.

## Description

### Field of the invention

The present invention relates to mounting of devices or interfaces on objects. More particularly, the present invention relates to a mounting module for mounting devices or interfaces on curved objects such as for example robotic components and machines, as well as to corresponding robots or systems and to methods for mounting devices or interfaces on curved objects.

### Background of the invention

Robot arms, including standard and collaborative robot arms, designed to be highly interactive, should effectively communicate their status to their surroundings constantly, ensuring workers are aware of their activities. However, operators frequently struggle to identify the robot's current operational phase, heightening injury risks due to accidental interference or crossing the robot's path. This lack of situational awareness can lead to accidents. Simple indicators like RGB rings or tower lights on robots are insufficient for conveying complex state information. Typically, these only indicate basic statuses like errors, attention needs, or good operation. When these systems (RGB rings/strips or tower lights signal an error, they fail to communicate the nature of the problem clearly to operators or provide straightforward troubleshooting steps. In loud environments, where robots are often found, audio solutions for communicating robot status are not feasible. Moreover, ineffective communication necessitates the involvement of external technicians to read out the error, delaying problem resolution and causing temporary robot downtime. This deficiency of understanding the outage of a robot directly necessitates external technician intervention and inspection, slowing down the resolution process and resulting in a temporary robot outage and a loss of production capacity.

In the transition to Industry 5.0, the increasing variety of products necessitates clear communication regarding specific assembly, operational and process steps. Ambiguity in task instructions can lead to mistakes and inefficiencies, adversely affecting strict cycle times. Up to now, task variations and instructions have primarily been conveyed through external screen systems. However, these screens have their disadvantages. Depending to view information on external screens requires operators to shift their focus away from the robot's main operation point (the end effector), and they also demand significant space in the workspace for installation, often needing one screen per worker for assembly instructions, plus an additional tower light or RGB ring for line leads/managers to monitor robot operational status. Furthermore, during operations, workers must acknowledge processing steps or verify specific part numbers. Currently, operators rely on paper or external screens for assembly and part verification, interrupting the workflow with the robot. Some solutions attempt to use overhead projectors or wearable augmented reality interfaces for more detailed information. Projectors, while offering a visual aid, require precise overhead installation, are affected by environmental lighting, and demand that the operator's attention be directed to the floor or mounting surface, which can distract from the end-effector. AR interfaces, though providing more comprehensive information and interaction capabilities, are heavy, expensive for companies, and can cause discomfort for workers when worn for extended periods of time.

Current systems fall short in allowing operators to modify the operational sequences of robots, such as flagging incorrect parts, providing feedback, or acknowledging a work step. Typically, simple I/O are employed, or external screens with touch functionality are installed within the cell. In rare instances, some robots are equipped with buttons near the end-effector. These buttons, however, provide only feedback through the indentation; they only permit the operator to acknowledge a specific work step if it is programmed into the execution series.

Additionally, current robotics safety measures, particularly on-robot proximity sensing, are quite limited. For example, capacitive robotic skins have poor angular resolution and fail to detect non-conductive obstacles. These sensors also lack the capability for centimeter-level occupancy mapping, which limits their usefulness in precise spatial evaluations for safety or context-aware robot control. Moreover, visual time-of-flight (ToF) point cloud sensors mounted on robots, despite providing spatial data, are hampered by their large size and vulnerability to light and environmental conditions. Achieving comprehensive coverage with these bulky sensors is difficult, and it becomes even more challenging when using sensors with higher resolutions. This issue is closely linked to the difficulty of mounting electronics on robots with curved or uniquely shaped bodies. The challenges include cable management, ensuring stable attachment on curved or irregular surfaces, and the need for custom fixtures. Standard mounting solutions often fall short, necessitating the development of custom-designed systems. This need for customization adds to the complexity, as well as the cost and time required for robot assembly and maintenance. To address the need for custom fixtures in robotic applications, some solutions have been provided for integrating screens directly into products and robots. One solution provides a socket in the robot housing for a slightly custom-bent screen in a fixed housing, installable via a connector plug on the robot arm and connected to internal electronics. While integrating the interface onto the robot allows operators to maintain focus on the robot arm, such an interface currently typically is highly specific to the robot model envisaged. Another proposed solution involves an external attachment with input buttons, resembling a box on the robot arm. This box, placed on top of the robot arm, could pose a safety hazard, potentially entangling the operator or causing injury at corners, which also does not seem to comply with power and force limiting standards (ISO15066).

One solution introduced a fully integrated interface that acts as a robot skin, part of the robot housing, with a tactile input layer and capacitive proximity layer. This interface, customized and integrated into a specific robot lineup, lacks adaptability to various robot models, limiting its universal use. Such interfaces necessitate custom designs for each robot line and specific model, increasing costs for manufacturers. Additionally, different robot users require tailored solutions, including unique sensors, interfaces, and end-effectors, complicating cabling within the housing and for the end-effector.

One crucial sensor for collaborative robotics is a distributed proximity sensor on the entire robot. In one example, a capacitive sensor is used, but as mentioned, it lacks sufficient angular resolution and range and cannot detect non-conductive obstacles, providing only basic proximity detection. Also, these integrated interfaces do not enhance passive force limiting, maintaining the same level of impact risk due to the absence of damping.

Lastly, integrated screens, sensors, and electronics generate heat, adding to the robot's own heat generation. This could lead to overheating issues, potentially affecting the robot's performance.

The field of robotics and intelligent machines has seen remarkable advancements in recent years, with applications spanning from industrial automation to personal assistance and beyond. In view of these machines becoming increasingly a part of everyday life, taking on roles that require interaction with humans and the environment, the ability to communicate effectively with users and to operate within diverse settings thus is paramount.

There thus is still a challenge of equipping robots and intelligent machines with interfaces that are both versatile and user-friendly. Consequently, there is a need for improved mounting systems for mounting interfaces on curved surfaces on objects.

### Summary of the invention

It is an object of the present invention to provide mounting modules and methods of mounting devices or interfaces on curved objects, such as for example robotic machines having curved surfaces or other objects having curved surfaces. It is an advantage of embodiments of the present invention that mounting on convex shaped objects is possible. It is an advantage of at least some embodiments of the present invention that they provide interfaces utilizing a resilient, flexible screen that conforms to various convex surfaces, overcoming the limitations of fixed-length displays. This adaptability is achieved by embodiments that allow for consistent screen length while accommodating different curvatures.

It is an advantage of at least some embodiments of the present invention that they allow for a non-permanent fixing module and/or method, employing securing of the mounting module on the object resulting in stable and adjustable attachment to the object. This design facilitates quick reconfiguration and transferability across different objects.

It is an advantage of at least some embodiments of the present invention that these allow for incorporation of a range of sensors and actuators within and/or on top of a substrate.

It is an advantage of at least some embodiments of the present invention that these address the issue of cable and component management through a good arrangement of components of the mounting module, allowing for organized and safe routing of cables and housing of small components.

It is an advantage of at least some embodiments of the present invention that mounting modules are provided that can absorb the impact of the robot with the environment, allowing the robot to operate faster in power and force limiting mode (ISO15066).

It is an advantage of at least some embodiments of the present invention that mounting modules are provided mitigating overheating risks by avoiding direct contact of electronics with the object, e.g. robot's body, and facilitating air convection between components of the mounting module, with options for enhanced convection through additional components.

It is an advantage of embodiments of the present invention that the mounting module may allow for an interface including a vibrating actuator integrated into touch sensitive modules, providing physical feedback to the user and enhancing an interactive experience.

It is an advantage of embodiments of the present invention that the mounting module may allow for an interface that can employ large-area electronic ultrasound phased arrays for high angular resolution proximity sensing, resilient to light conditions and environmental conditions.

It is an advantage of embodiments of the present invention that the mounting module may allow for determining the relative positions of interconnected screen modules without manual configuration, enhancing adaptability in dynamic environments.

The object and optionally one or more of the indicated advantages is by a mounting module or mounting method according to the present invention.

In the first aspect, the present invention relates to a mounting module for attaching to a curved object, the module comprising a flexible upper substrate, a plurality of supporting elements, each supporting element comprising at least one foot and at least one leg connecting the at least one foot with the flexible upper substrate, wherein the mounting module is adaptable to the curvature of the curved object while maintaining the dimensions of the flexible upper substrate consistent across its surface, the supporting elements adjusting their alignment during adaptation of the mounting module to the curvature of the curved object.

Where reference is made to alignment of the supporting elements, reference may be made to the average orientation of the supporting elements or the legs thereof, with respect to other supporting elements or the legs thereof.

It is an advantage of embodiments of the present invention that the mounting module allows for efficient heat dissipation, e.g. of a display or other electronic components present on or in the upper substrate, since it allows for natural heat dissipation by the space between the upper substrate and the feet, which facilitates air channeling for heat dissipation via air convection.

The at least one foot may have any suitable pattern or shape. In some embodiments the foot may be simply square or rectangular or circular. The at least one foot may in some embodiments be a suction cup, although embodiments may not be limited thereto.

In embodiments, the legs may be oriented substantially perpendicular to the flexible upper substrate. This embodiment provides the advantage of ensuring a stable and consistent orientation of the supporting elements relative to the upper substrate. The length of the feet does not need to be the same for all legs.

In embodiments, the feet of the plurality of supporting elements may form a contact area for contacting the curved object, the contact area having a surface area being less than 90%, e.g. less than 80%, e.g. less than 70%, e.g. less than 60% of the surface area of the flexible upper substrate.

It is an advantage of embodiments of the present invention that the mounting module can be easily used for convex surfaces. In embodiments, for the mounting module being in a non-bent state, a cross-section, parallel to the upper substrate, of the leg of a supporting element parallel to the upper substrate may have a substantially smaller area than a cross-section, parallel to the upper substrate, of the at least one foot of that supporting element. In embodiments, the legs and/or feet may be made of a resilient material e.g. rubber. This embodiment provides the advantage of enhancing the flexibility and durability of the supporting elements, allowing them to better conform to the curvature of the object and absorb impacts.

It is an advantage of embodiments of the present invention having legs and/or feet being made of a resilient material that these allow for shock absorption.

The legs and/or feet may also be made of another material such as plastic, like more hard plastics, such as for example ABS. For such materials, the elasticity may be more limited than for resilient materials. Such materials may absorb the shock only a single time by plastic deformation. In some applications this may be sufficient, since shocks are not supposed to happen and the single shock absorption already allows for an initial additional security.

In embodiments, the legs may comprise openings for fixing the mounting module to the curved object with fixing means. This embodiment provides the advantage of allowing for secure attachment of the mounting module to the curved object using various fixing means. In alternative embodiments, no openings may be present in the legs.

The fixing means may for example comprise one or more of straps, clips, interconnections, mounts, zippers or screwed rigid connectors. It is an advantage of embodiments of the present invention that the fixing means may allow for a good distribution of the tension of the fixing power between the mounting module and the curved object, so that it is ensured that the mounting module is adhered to the surface of the curved object. Embodiments of the present invention may ensure sufficient friction being generated to form a rigid connection between the mounting module and the curved object. The fixing means may result in sufficient flexibility with respect to adjustability and reusability. It is an advantage of embodiments of the present invention that systems may be provided that can be detached and reapplied thus increasing the versatility and practicability in various applications.

In embodiments, the upper substrate may be a mechanical supporting substrate, e.g. for supporting one or more of a flexible display, one or more sensors, one or more sensor layers, one or more actuators, one or more input/output means, one or more electronic components or spacers. In embodiments of the present invention, the one or more sensors may for example be temperature sensors, tactile sensors, vibration sensors, ultrasound sensors, proximity sensors, or alike. The one or more actuators may for example be vibration actuators. In embodiments of the present invention the one or more input/output means may be interactive components like input/output buttons, touch-sensitive layers, or alike. The one or more electronic components may comprise one or more microphones and/or one or more camera lenses. In embodiments of the present invention, spacers may be used to provide full coverage and additional features such as shock absorption, protection against entanglement, dust shielding, and alike.

In embodiments, the upper substrate may comprise one or more of flexible displays, one or more sensors, one or more sensor layers, one or more actuators, one or more input/output means, one or more electronic components or spacers. This embodiment provides the advantage of integrating various functionalities directly into the upper substrate, enhancing the capabilities of the mounting module. In embodiments of the present invention, the flexible display may be high-resolution flexible screens for superior image quality or low-resolution flexible screens which are more cost-effective and have a lower bandwidth and little to no GPU requirements. The upper substrate may be made of a metamaterial or may support a metamaterial. Since also the processing power (GPU) may be distributed over smaller GPU's in view of the modularity of the system, the cost and possibilities of processing power for the systems is improved.

In embodiments, the space in between the legs may comprise one or more of signal connections, power connections, data connections, one or more electronic components such as for example driving electronics or communication components.

In embodiments of the present invention, between the legs a bus system, e.g. a dual bus system, may be embedded. The bus system may be a bidirectional bus for input/output components. The bus may enable two-way communication with sensors, displays or other input/output devices. It may allow for wired and wireless data transmission and control signal exchange to a different module or control unit. The buses may be implemented manually in the spacing between the legs or may be embedded upfront in the mounting module, e.g. in the spacing between the legs. In some embodiments, communication components such as for example wireless communication components, such as for example for edge artificial intelligence embedded data interpretation.

In embodiments, the mounting module may furthermore comprise a fan for inducing air convection between the upper substrate and the feet. This embodiment provides the advantage of improving heat dissipation and preventing overheating of the components mounted on the upper substrate.

In embodiments, the upper substrate may comprise through holes for any of cooling, feedthrough of electrical connections, feedthrough of data connections, etc. It is an advantage of embodiments of the present invention that, when compared to custom-designed full-interface solutions, this approach allows for a more economical solution for the client, thus providing an affordable yet high-quality alternative. It is an advantage of embodiments of the present invention that they provide customizable solutions. The system may provide modular solutions.

In embodiments, the curved object may be an object having a convex surface. This embodiment provides the advantage of ensuring that the mounting module is specifically designed to conform to and function with convex surfaces.

It is an advantage of embodiments of the present invention that the mounting module provides for a plug-and-play approach, thus allowing users to tailor the purchase of the mounting modules to their specific needs. It furthermore eliminates the necessity for a one-size-fits-all mounting element, thus ensuring a cost-effective approach and ensuring the possibility to adapt over time. Since a modular arrangement is provided, this opens the possibility for larger production scales, thus resulting in reduced costs.

In embodiments, the upper substrate may comprise or support a proximity sensing system such as for example an ultrasound layer or a proximity sensing system based on proximity sending technology. This embodiment provides the advantage of incorporating advanced proximity sensing capabilities into the mounting module.

In the second aspect, the present invention relates to a mechanical construction comprising a mounting module according to any embodiments of the first aspect.

In embodiments, the mechanical construction may be a robot. This embodiment provides the advantage of applying the innovative mounting module to robotics, enhancing the robot's functionality and interaction capabilities with its environment.

The mechanical construction may be any suitable object, such as for example a robot, a machine, a pole, a billboard, a vehicle such as for example a bicycle, a car, etc. The mechanical construction advantageously has a curved object. The curved object may have a convex surface.

It is an advantage of embodiments of the present invention that they allow for a modular design and allow for seamless integration e.g. with robots, thus enhancing functionality and user interaction capabilities of such robots. The mounting modules may allow for integration of screens and sensor modules on such robots. Standardized unit production significantly reduces manufacturing costs, as opposed to the higher expenses associated with producing low-volume, custom-sized units. This mass production approach ensures a more cost-effective product for the market.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Short description of the drawings

The invention will now be further described, by means of example, with reference to the associated figures wherein:
FIG. 1 illustrates different views of a mounting module according to an exemplary embodiment of the present invention.
FIG. 2 and FIG. 3 illustrate the possibility of a mounting module bending to different objects, according to embodiments of the present invention.
FIG. 4 and FIG. 5 illustrate the integration of displays on an object, thus illustrating an example of an embodiment of the present invention.
FIG. 6 illustrates the results of a study evaluating the advantages of integration of systems according to embodiments of the present invention.

The figures are only schematic and not restrictive. It is possible that the dimensions of some components have been exaggerated and have not been represented to scale in the figures for illustrative purposes. Dimensions and relative dimensions do not necessarily correspond with actual embodiments of the invention.

Reference numbers used in the claims cannot be interpreted to restrict the scope of protection.

In the various figures, the same reference numbers refer to the same or similar elements.

### Detailed description of illustrative embodiments

The present invention will be described in respect of special embodiments and with reference to certain drawings, however the invention will not be restricted to this but will only be restricted by the claims.

The terms first, second, third and the like in the description and in the claims are used to distinguish similar elements and are not necessarily used for describing an order, nor in time, nor in space, nor in ranking nor in any other manner. It should be understood that the terms used in this way are interchangeable in appropriate circumstances and that the embodiments of the invention described herein are suitable to work in a different order than described or indicated herein.

Furthermore, the terms top, bottom, above, in front of and the like used in the description and the claims are used for description purposes and not necessarily to describe relative positions. It should be understood that the terms used as such are interchangeable in given circumstances and that the embodiments of the invention described herein are also suitable for functioning according to different orientations than described or indicated here.

It should be noted that the term "comprises", as used in the claims, should not be interpreted as being restricted to the items described thereafter; this term does not exclude any other elements or steps. It may be interpreted as specifying the presence of the features, values, steps or components indicated being referred to, but does not exclude the presence or addition of one or several other features, values, steps or components, or groups thereof. So, the extent of the expression "a device comprising items A and B" should not be restricted to devices consisting of components A and B only. It means that in respect of the present invention, A and B are the only relevant components of the device.

Reference throughout this specification to "one embodiment" or "an embodiment" means that a specific feature, structure or characteristic described in connection with the embodiment has been included in at least one embodiment of the present invention. So, occurrence of the expressions "in one embodiment" or "in an embodiment" in various locations throughout this specification do not necessarily all need to refer to the same embodiment but may do so. Furthermore, the specific features, structures or characteristics may be combined in any suitable manner as would be clear to a person skilled in the art on the basis of this publication, in one or several embodiments.

Similarly, it should be appreciated that in the description of sample embodiments of the invention, sometimes various features of the invention are grouped together in one single embodiment, figure or description thereof intended to streamline the publication and to help the understanding of one or several of the various inventive aspects. This method of publication should therefore not be interpreted as a reflection of an intention that the invention requires more features than explicitly mentioned in each claim. Rather, as the following claims reflect, inventive aspects lie in fewer than all features of one single previously publicised embodiment. So, the claims following on from the detailed description have been explicitly included in this detailed description, with every independent claim being a separate embodiment of the invention.

Furthermore, while some embodiments described herein comprise some, but not other, features included in other embodiments, combinations of features from various embodiments are intended to be within the scope of the invention, and these form various embodiments as would be understood by the person skilled in the art. For example, in the following claims, any of the embodiments described may be used in any combination.

In the description provided here, a large number of specific details are raised. It may therefore be understood that embodiments of the invention may be embodied without these specific details. In other cases, well-known methods, structures and techniques are not shown in detail in order to keep this description clear.

In a first aspect, the present invention relates to a mounting module. The mounting module may be especially suitable for use in robotics or intelligent machines, e.g. for specifically communication and safety systems for human machine interaction, such as for example for industrial and collaborative robots or for other machines or objects. The module may especially be suitable for objects having a convex surface, although not being limited thereto. It is an advantage of embodiments of the present invention that the mounting systems are suitable for mounting to objects, such as for example billboards, advertisement poles, vehicles e.g. bikes, cars or large trucks, handrails, etc. It is an advantage that mounting can be performed to objects having a curved surface, thereby significantly improving adaptability, usability and effectiveness of these machines for various applications.

The mounting module comprises a flexible upper substrate. This flexible upper substrate may be a support for supporting e.g. one or more of a flexible display, one or more sensors, one or more sensor layers, one or more actuators, one or more input/output means, one or more electronic components or spacers or other components. Alternatively, the flexible upper substrate may have e.g. one or a combination of one or more of a flexible display, one or more sensors, one or more sensor layers, one or more actuators, one or more input/output means, one or more electronic components or spacers or other components integrated thereon.

The mounting module furthermore comprises a plurality of supporting elements, each supporting element comprising at least one foot and at least one leg connecting the at least one foot with the flexible upper substrate. As will be further illustrated below, the particular configuration of the at least one foot and the at least one leg will in some embodiments accommodate for improved cooling, connectivity and cable management, positioning of components, etc. The latter will be illustrated further below with respect to particular embodiments. It is an advantage of embodiments of the present invention that at least some mounting modules provide an internal heat dissipation mechanism, e.g. by providing an internal airflow system within a component or robot. The mounting module furthermore is adaptable to the curvature of the curved object while maintaining the dimensions of the flexible upper substrate consistent across its surface. The supporting elements thereby adjust their alignment during adaptation of the mounting module to the curvature of the curved object.

It is an advantage of embodiments of the present invention that they increase identification of the object's current operational phase, reduces the injury risks and allow conveying complex state information. Due to this improved effective communication, the need for external technicians, delaying solutions and the amount of downtime can be reduced. In industrial environments, the latter may result in an increased production capacity. Embodiments may assist in providing clear communication regarding specific assembly and operational steps. Furthermore, since the components such as screens are integrated in the objects, the focus can be kept on the object's, e.g. robot's, main operation point. It also allows for easy acknowledgment of processing steps, part verification, etc. Furthermore, proximity sensing is also made more efficient by embodiments of the present invention, e.g. with improved angular resolution, with respect to detection of non-conductive obstacles, with respect to detection range, etc.

Different embodiments of the present invention provide one or more of the advantages listed below.

It is an advantage of embodiments of the present invention that a modular interface solution is provided, designed to enhance human-machine interaction in the field of robotics and intelligent machines. It also is an advantage that interactivity is enhanced and/or that functionality is enhanced for robotics and intelligent machines.

It is an advantage of embodiments of the present invention that advanced communication interfaces are provided. According to at least some embodiments of the present invention, the mounting system may be equipped for providing adaptable screen technology. The mounting system thus may provide a resilient, flexible screen that conforms to various convex surfaces, overcoming the limitations of fixed-length displays. The adaptability is achieved through the design of the mounting system featuring a segmented plate system that allows for consistent screen length while accommodating different curvatures. It is an advantage that embodiments of the present invention avoid the need for particular technical expertise for designing and installing holding interfaces for each specific object or surface, since embodiments provide modular solutions applicable for a plurality of objects. Embodiments avoid the need for custom brackets such as for example 3D printed brackets, since a solution is provided that can universally adapt to different shapes and different radii. In this way, no individual design is required for each screen size. Furthermore, no permanent attachment is required thus reducing the risk of damaging when screens or sensors or actuators need to be removed or reused on different objects, e.g. different robots and machine types. It thus is an advantage of at least some embodiments of the present invention that these provide a non-permanent fixing method. In some embodiments securing may be performed by employing securing straps over the segmented plate structure for stable and adjustable attachment to the object. It is an advantage of embodiments of the present invention that a quick reconfiguration can be performed. It also is an advantage of embodiments of the present invention that transferability across different objects can be obtained.

It is an advantage of at least some embodiments of the present invention that the mounting system integrates a range of sensors and actuators within or on the top surface, thus providing an integrated sensor and actuator system. The sensors may comprise temperature, vibration and/or proximity sensor, along with other sensors and other interactive components. In some embodiments, integration may be managed based on one or more bus systems, ensuring seamless communication and functionality. In one example the integration may be managed through a dual bus system.

It is an advantage of at least some embodiments of the present invention that these address the issue of cable and component management. Using the arrangement of the mounting system, more particularly the space between the upper substrate and the feet, organisation and safe routing of cables as well as housing of small components can be obtained. Cable management may in some examples be especially suitable for powering the end effector or sensors installed on the object. Systems according to embodiments of the present invention may overcome the risk of loosening of cables, thus avoiding safety hazards for operators for becoming entangled in the cables, leading to less operational disruptions. Embodiments of the present invention also avoid that cables need to be bundled together and thus avoid the need for disassembling and unwounding if a single cable or interface needs to be modified.

It is an advantage of at least some embodiments that the mounting module provides shock absorbing properties. The module can absorb the impact of the robot with the environment, thus allowing the robot to operate faster in power and force limiting mode, in some embodiments thus resulting in ISO15066 compliance. Embodiments of the present invention therefore allow for reducing impact with the environment, thus allowing robots to operate at faster speeds safely.

It is an advantage of at least some embodiments of the present invention that the mounting module can mitigate overheating risks by avoiding direct contact of electronics with the robot's body and/or by facilitating convection between the upper substrate and the feet. In some embodiments, even enhanced convection through the introduction of additional components such as ventilators can be obtained.

It is an advantage of at least some embodiments of the present invention that a system is provided having tactile feedback capability. The mounting module may include a vibrating actuator integrated or mounted on the upper substrate, e.g. into touch sensitive modules, thus providing physical feedback to the user and enhancing the interactive experience.

It is an advantage of at least some embodiments of the present invention that large-area ultrasound phased arrays, or other proximity sensing techniques can be employed for high angular resolution proximity sensing. Sensing may in such applications be resilient to light conditions and environmental conditions.

It is an advantage of at least some embodiments of the present invention that they provide mounting modules showing features for determining the relative positions of interconnected screen modules, thus resulting in less or no need for manual configuration, thus enhancing adaptability in dynamic environments.

It also is an advantage of embodiments of the present invention that, e.g. for robots, data like joint positions and movement information can be provided for enhancing universal applicability. Furthermore, it is an advantage of embodiments of the present invention that processing power is available in the robot, thus providing advantages with respect to data accuracy and system responsiveness.

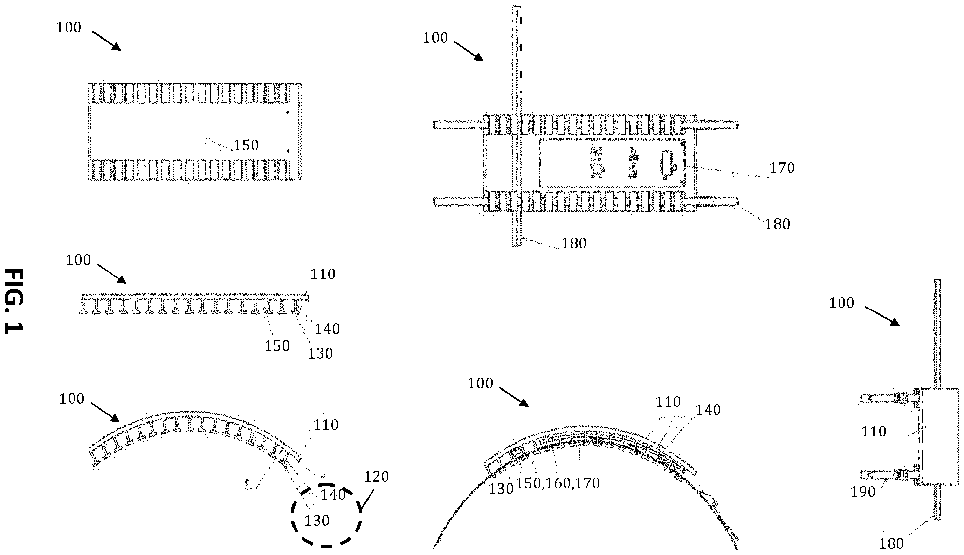

By way of illustration, embodiments of the present invention not being limited thereto, standard and optional features now will be described with reference to FIG. 1 showing different views of an exemplary mounting module 100. The mounting module 100 shows a flexible upper surface 110, which also may be referred to as top plate or mounting plate. The upper surface 110 is designed as a thin resilient plate. This surface 110 is capable of conforming to the contours of the convex object to which it needs to fit, thus for example ensuring that a flexible screen can snugly fit against the surface.

The latter is obtained since the upper surface functions as the anchoring foundation for e.g. a flexible display or other sensors on flex or semi-flex PCBs. To attach the display or different layer securely to the upper surface, a specialized adhesive can be used (such as silicone-based adhesive, epoxy, cyanoacrylate adhesive or Methyl Methacrylate Adhesives, etc...), capable of maintaining a strong bond even when the structure is bent or deformed. The exact adhesive will depend on the manufacturing choice as well as the final type of plastic used for the structure. But layer adhesion between different plastic or plastic and rubbers is well documented and for each case multiple solutions are commercially available. In certain scenarios, if the flexible display itself possesses adequate structural strength, it can directly function as the upper surface. Furthermore, a number a plurality of supporting elements 120 are shown. These supporting elements comprise at least one foot 130 and at least one leg 140, which also may be referred to as linking wall, linking the upper surface 110 with the feet 130. The surface established by the different feet 130 can also be referred to as the second plate. In the exemplary mounting module 100, also the space 150 between the upper surface 110 and the feet 130 is shown, which can be used for introducing additional components, such as for example but not limited to processing electronics 170, screen drivers, bus system, tactile feedback components, etc. or for bus cables or cables 180 to wire end-effectors. Also in or between the legs 140, openings 160 may be provided for passing cables or mounting other elements. In FIG. 1, securing straps 190 also may be provided for securing the mounting module 100 to the object. According to some embodiments, fixing means like securing straps, such as for example zip clamps, can be threaded through recesses in the leggs positioned above the feet, or e.g. in the feet. The fixing means distribute tension, evenly ensuring consistent adherence to the surface's curvature. By tightening these straps, sufficient friction is being generated to form a rigid connection between the structure and the convex body. This mechanism also offers flexibility in terms of adjustability and reusability. Other fixing means such as for example To adapt it to a different surface, the straps can be loosened, allowing for easy adjustment. This non-permanent fixing method means that the structure can be detached and reapplied to another body as needed, increasing the versatility and practicability in various applications. The fixation means may alternatively or additionally also may comprise or be clips, rubber-interconnects/mounts, zippers or screwed rigid connectors. In another example, the feet may comprise the shape of suction cups, allowing connection of the module to the curved surface by means of such suction cups.

In some embodiments, in openings where the fixing means are being tightened or in other openings, a flexible filler module can be inserted too that can be cut to size, if the robot convex circumference is not perfectly matching the dimensions of a single or combined chained modules. In other embodiments, these opening may be kept open to provide channels or to bundle cables..

According to embodiments, the mounting module 100 is adaptable to the curvature of the curved object while maintaining the dimensions of the flexible upper substrate 110 consistent across its surface. The latter can also be seen in FIG. 1. The supporting elements 120 adjust their alignment during adaptation of the mounting module 100 to the curvature of the curved object.

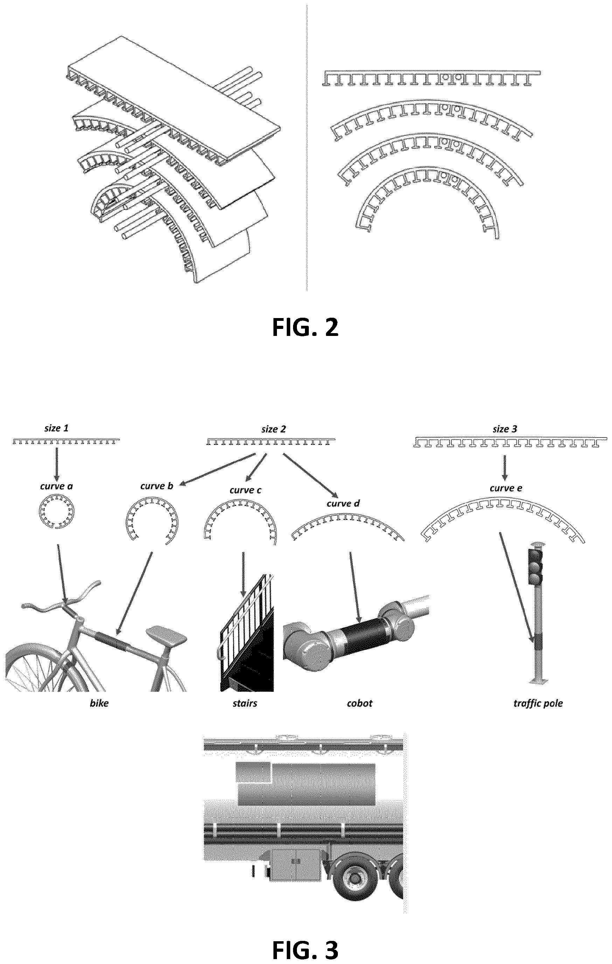

FIG. 2 illustrates an example of an implementation of how the mounting module 100 according to embodiments can adapt to different curvatures. The feet 130 may be arranged differently, depending on the application, so that the mounting module is able to adapt to different curvatures as is shown in FIG. 2. As the structure bends to match the convex surface, the legs and feet realign, ensuring the upper surface, and hence a screen's length of a screen that is mounted thereto, remains consistent across the surface.

The proportion of the feet and legs is not fixed and can be adapted based on various factors such as material properties, manufacturing constraints, or specific application requirements. In advantages embodiments, the size of the feet is larger than the thickness of the legs but smaller than the spacing between these walls. In some embodiments, the feet may be designed to be approximately half the size of the space between the walls. This size provides a good balance between achieving an optimal bending radius and maintaining sufficient contact and friction with the body of the robot. This design ensures flexibility and adaptability, making it suitable for a range of convex surfaces and robot models.

The legs and the feet do not need all to have the same dimensions. Furthermore, over the surface, variation of the density of the legs and the feet may be used.

According to some embodiments, the issue of adapting flexible screens to convex surfaces with varying dimensions is particularly addressed by providing a universal fixture. This fixture is designed to maintain the constant length of the screens while enabling them to conform to different convex surfaces. To demonstrate the versatility of different proportions while retaining the same functionality, in one example, different structures in three distinct sizes were tested. The implementation is shown in FIG. 3. In this example, multiple sizes of the structure can fit the same application. For instance, in the case of a bicycle, both sizes 1 and 2 can be used. To emphasize the "one size fits all" objective, size 2 is shown bent into three different curves (b, c, and d), each tailored for a unique application. Curve b is a configuration that is suitable for displaying publicity on a bicycle, such as during events like the Tour de France, curve C is a configuration wherein the structure is bent to fit on stair handrails, providing both publicity and useful information, and curve d is a configuration wherein the screen is adapted for use on collaborative robots (cobots), enhancing interaction and collaboration with human operators. These examples highlight the flexibility of the structure. It can adapt to various applications and sizes, demonstrating its potential in diverse contexts beyond just industrial robotics. This adaptability is a significant advantage, particularly in environments where customization and versatility are essential.

One of the main advantages of embodiments of the mounting module is that it can be mass produced as the key benefit is to have a high number of similar unit that can be assembled. As such the structure of the mounting module and the legs, also referred to as pillars, may be formed in any suitable way, e.g. by using injection molding with suitable plastic materials (e.g., thermoplastics like polyurethane) that offers desired properties like flexibility, durability, resistance to substances it is exposed to during the fabrication process or further industrial operations. Other manufacturing techniques also can be used, such as for example 3D printing techniques such as a fused deposition modelling (FDM) can be used, e.g. to lower development costs.

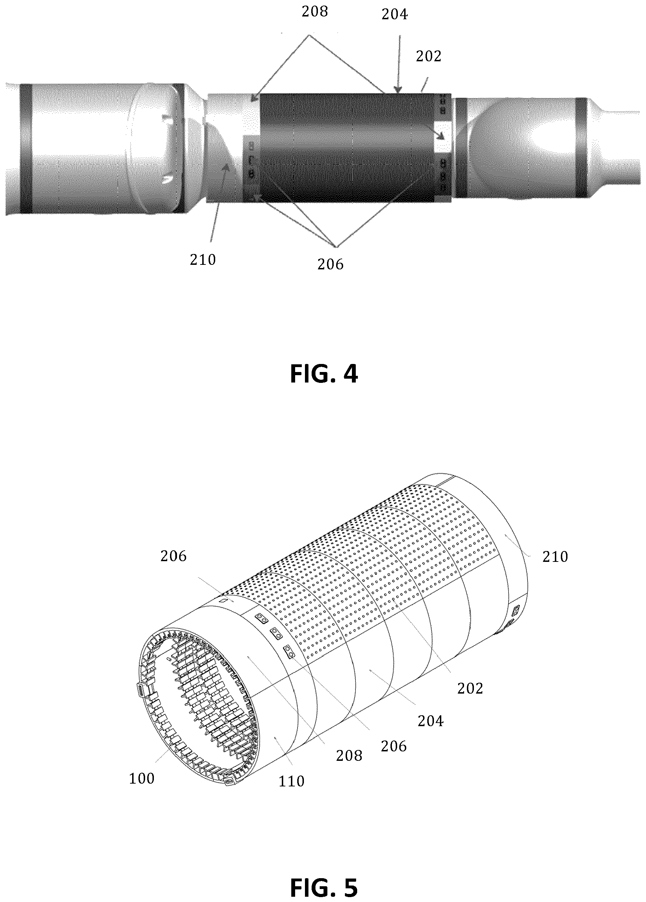

In one example, the integration of a flexible screen on a curved object, e.g. a part of a bicycle, is shown and discussed. FIG. 4 and FIG. 5 illustrate the integration of a low-resolution display LED module 202 and a high-resolution display module 204 on an object, in the present example being a bicycle. Furthermore sensor modules 206, a spacer 208 and electronic components 210 such as the bus driver and edge processing electronics are illustrated.

By way of illustration, embodiments not being limited thereto, an example of the integration of flexible OLED display technology as a robotic skin-interface to improve communication between robots and humans in a genuine industrial environment is given, illustrating standard and optional features and advantages of embodiments of the present invention. The example illustrates an application in large-area electronics (LAE), wherein flexible substrates such as plastic polymers substitute traditional rigid silicon substrates. This advancement has enabled the development of thin-film electronics that are light, flexible, and affordable when mass-produced. LAE-based thin-film transistor (TFT) backplanes play an important role in modern display technologies such as OLEDs and mini/microLEDs. The TFT backplane, with circuitry connected to each pixel in the display, determines the brightness and colour of the pixel. In the example, the creation of high-resolution visuals is obtained, whereby the flexible display sheets are installed onto curved surfaces such as the robot's body and used to communicate the robot's state with the operator.

The example illustrates how embodiments of the present invention allow to use flexible high-resolution display skins as communication interfaces in human-robot collaboration, provide interfaces aligned with the end-user needs and perspectives for ecological validity and illustrate the impact of the interface on human-robot collaboration.

In the example, a task that was selected that has traditionally been performed manually but has high potential to be robotized to improve the ergonomics of the operators and prevent shoulder-related musculoskeletal disorders. The flexible display technology introduced in the embodiment used in the example was used for this task to ensure clear communication and smooth human-robot-collaboration (HRC). The task selected for enhancement is referred to as the turbocharger preinstallation, an essential step in the manufacturing sequence of TSI-motors built at VW factory Motorenwerk Chemnitz in Germany.

The installation of the turbocharger, a pre-assembled unit weighing 10 kg, presents a significant physical challenge during assembly. Operators are required to lift this heavy object twice: first, from the stock box to a pre-assembly workbench, where various tasks, such as screwing, removing protection caps, and fixations, are performed. Subsequently, it must be manually hoisted onto the motor block. This has proven in the past to impose acute strain on the operators' joints, back, and arm muscles, and can, therefore, be called an ergonomically difficult and strenuous unsupported lifting task because operators need to bend over and reach out with their arms above the stock box to grab the turbocharger. Lifting 10kg of weight in this position ca. 200-240 times a shift can pose a high risk of long-term musculoskeletal disorders. This is in line with the personal comments of operators who have been working at this station for several decades, reporting pain in their shoulder joints. Therefore, substituting this part of the process while leaving the human with all fine-grained manual work has the potential to alleviate the physical strain of operators while maintaining the human as an indispensable part of this production step.

In the example, a work cell equipped with a collaborative robot (UR10e) was established to test an interface. The robot was outfitted with a custom end-effector designed specifically for handling turbochargers from stock boxes while adhering to the robot's payload limit of 12.5 kilograms. The interface was strategically integrated onto the robot's upper arm link to ensure clear visibility for operators during operational procedures. A commercially available display that could be integrated into the robot was chosen, offering ample screen real estate to ensure readability from a distance of approximately 0.5 to 1 meter. For this purpose, a 13.3-inch Quad XGA resolution Active-Matrix OLED display (LP133QX1) [37] was selected. Given the limited bending radius of the chosen display, a custom 3D-printed housing was engineered to be mounted onto the upper link of the robot. The OLED display was connected to an HDMI driver board linked to a Raspberry Pi 4. The setup interfaced the UR10e robot controller's digital I/O with the Raspberry Pi's GPIO pins using a logic level shifter for 12V-3.3V conversion. The robot communicated its process state using a one-hot encoding scheme, relaying data to the interface driver of the Raspberry Pi through digital I/Os. An OLED display was integrated into a human-robot collaboration system using a mounting module, according to the present invention. The information displayed on the OLED was controlled using Raspberry Pi 4 and the robot controller. The interface design was thoroughly influenced by operator feedback during a define phase and expanded upon a research on light feedback cues for communicating the collaborative robot's intentions. This includes not only confirming the correct or incorrect actions by the operators, but also signalling the robot's actions as correct (green) or incorrect (red) based on the robot's own operational state awareness. Focusing on the key information for operators - the Robot Movement - the interface uses a gradient fading effect, reminiscent of the Orb/crystal ball UI elements in generative Al, to indicate robot movement. This is overlaid with the robot's process state text, e.g., "(1) Picking up turbocharger" or "(2) Attaching turbocharger" (translated from German), complemented by a progress ring to show ongoing movement, and prevent interference by the operator, and a blue colour to indicate approaching task handover to the operator. For Process Monitoring, the interface currently displays only whether the turbocharger is correctly grasped and placed, and whether it is properly attached to the motor block, using the robot's power and force sensors. This is displayed in green, signalling the correct robot action. Further monitoring steps, such as using a YOLO image segmentation model for assembly verification and validating whether caps have been removed and screws correctly fixed, were not implemented. The interface also includes Working Steps &Assembly Instructions, which help operators understand complex tasks more clearly, bridging the gap between intricate technical processes and user-friendly visual communication. Additionally, it displays Information on Parts for quality control and matching verification of part numbers. Robot Errors are indicated by a red flashing background and textual error descriptions for operator resolution. Stock information and Ergonomic Feedback, while not implemented, were conceptualized for future integration. The design includes stock indicator icons to display the remaining number of turbochargers on the current pallet and prompt workers to replace the pallets once emptied. Ergonomic feedback was envisioned to be gathered using a vision-based external skeleton-tracking system. This system would process data and calculate an ergonomic REBA score, with recommendations displayed as stickmen icons. These icons would guide workers in maintaining the correct posture, such as keeping their back straight, a concept proven effective in previous studies. In line with UI design principles, the General Information category was excluded to keep the interface minimal and effective, avoiding redundant elements such as clocks already prevalent in the factory. This decision aligns with the literature that emphasizes streamlined Uls to reduce cognitive load and maintain focus, ensuring that only essential information is presented to enhance usability and design sleekness.

The interface's icons and text were crafted in Adobe Illustrator, tailored to match the screen resolution, while gradient and colour animations were created using Adobe After Effects. The front-end development utilizes the KIVY Python framework, which responds dynamically to the robot's state and displays the corresponding interface elements. A nonblocking approach was implemented for backend development by utilizing a separate thread to monitor the IOs of the robot. Additionally, the interface was configured to automatically boot in tandem with the robot controller. The robot was tested with and without the OLED interface. The results showed that when the OLED was implemented, the operators felt less anxious when thinking about working with the robot, and were slightly more positive toward the robot. While the OLED implementation did not significantly enhance the perceived usefulness of the system, the results indicate a positive reception overall. The participants expressed enjoyment in working with the robot and demonstrated a strong intention to use it in their work environment, reflecting an optimistic view towards the integration of this technology. They did not see the OLED adding any sociability, for example, expressing social behaviours, but felt it could increase social influence, for example, other people would like them to use the robot with OLED. Finally, they would trust the robot with the OLED significantly more than the original robot setup.

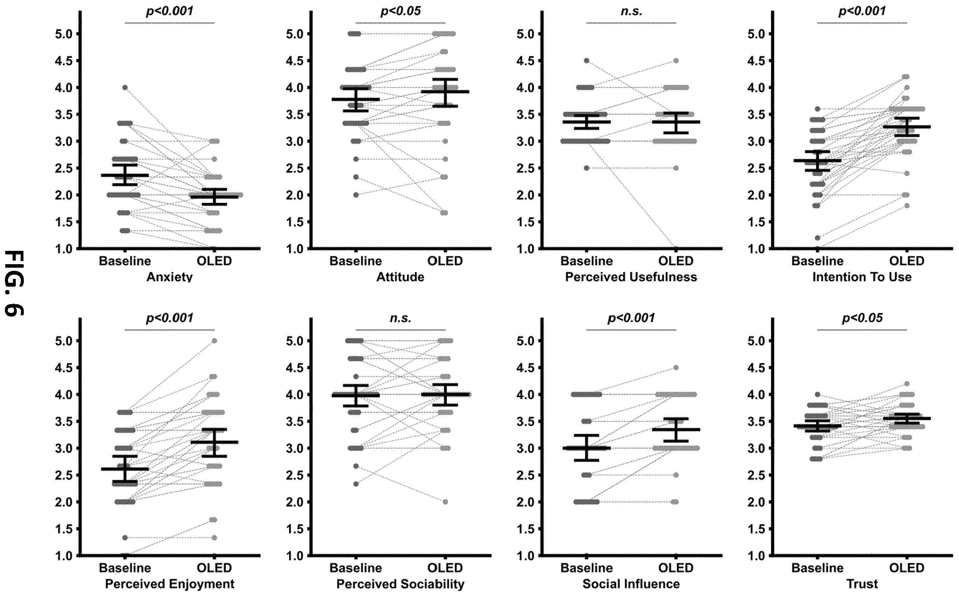

The results of the survey are shown in FIG. 6, indicating the optimistic view towards integration of the technology. The survey was conducted qualitatively with a small group of operators (n = 9) and quantitatively with a large group (n = 42).

In this example, the integration of flexible OLED display technology as a robotic skin-interface was studied in an industrial automation context at Volkswagen (VW) with a co-design approach to enhance robot-to-human communication. It revealed several positive effects on human-robot collaboration, highlighting the potential benefits of incorporating flexible OLED technology into industrial settings. In the small-scale qualitative evaluation, it was shown that participants showed a marked preference for the version equipped with the interface. The tasks, with and without the interface, were not strenuous. This could be attributed to the robot's slow speed during operation, as specified in ISO15066. Additionally, the accessible radius of movement of the robot was clearly defined and consistent, which may have contributed to this perception. Furthermore, it is possible that the work was perceived as less taxing due to the breaks necessitated by the robot's consistent, non-accelerating speed, resulting in prolonged cycle times. Collectively, participants agreed that the screen was beneficial during the training phase, as it potentially reduces the error rate and facilitates quicker comprehension of the task.

In one embodiment, the previous example can be further developed with the implementation of two-way communication between humans and robots. This can be achieved by integrating sensors. In a particular example, such sensors could be imagers or privacy-preserving RaDARs and utilizing these to track and recognize human gestures and actions. The robot can then be adjusted in behaviour in response to human actions and provide additional information, such as verifying a task handover via the interface complemented with a nodding movement.

Further by way of illustration, a robot using the mounting module according to embodiments of the present invention was developed. The robot allows for real-time awareness of the robot position in the environment, taking into account position, size, reach, temperature, payload, vibrations and system load. This process may be based on data from kinematics sensors, optionally combined with input of a real-time encoder and load data, which are provided as input for a pre-processing element that allows checking the signal integrity and allows for merging of the robot sensor data. The pre-processed information is used in a synthesis element, which loads the geometric voxel model of the robot to the new position and optionally assigns other features. The system than further creates a real-time neuro-voxel model, thus providing a real-time data structure on the robot state and positon.

The robot also allows for real-time parametric reconstruction of the environment around the robot, taking into account static and dynamic objects, materials, velocity and rotation. For handling/creating this information, data from a stereo vision camera, a LiDAR system and a FMCW RaDAR is provided to a pre-processing element which filters the data with respect to sensor noise and which integrates the data by combining the sensor signals. The pre-processed data is then processed by voxelization of the sensor detections and by assigning features such as material type and speed to the data. The real-time data structure on externally detected objects is then created based thereon.

Both sources of real-time information is coupled together and is used as input for a processor, e.g. a neuro-voxel processor. The output of the processor controls an actuator, i.e. a linear control translator, allowing to control the robot movement path. Whereas in the present example, the use of certain sensors and data capturing means are mentioned, the type of sensors and detectors may be altered, depending on the application envisaged.

## Claims

1. A mounting module (100) for attaching to a curved object, the module comprising
- a flexible upper substrate (110),
- a plurality of supporting elements (120), each supporting element (120) comprising at least one foot (130) and at least one leg (140) connecting the at least one foot (130) with the flexible upper substrate (110),
wherein the mounting module (100) is adaptable to the curvature of the curved object while maintaining the dimensions of the flexible upper substrate (110) consistent across its surface, the supporting elements (120) adjusting their alignment during adaptation of the mounting module (100) to the curvature of the curved object.

2. A mounting module (100) according to claim 1, wherein the legs (140) are oriented substantially perpendicular to the flexible upper substrate (110).

3. A mounting module (100) according to any of the previous claims, wherein the feet of the plurality of supporting elements (120) form a contact area for contacting the curved object, the contact area having a surface area being less than 90%, e.g. less than 80%, e.g. less than 70%, e.g. less than 60% of the surface area of the flexible upper substrate (110).

4. A mounting module (100) according to any of the previous claims, wherein, for the mounting module being in a non-bent state, a cross-section, parallel to the upper substrate (110), of the leg (140) of a supporting element (120) parallel to the upper substrate (110) has a substantially smaller area than a cross-section a cross-section, parallel to the upper substrate (110), of the at least one foot (130) of that supporting element (120).

5. A mounting module (100) according to any of the previous claims, wherein the legs and/or feet are made of a resilient material e.g. rubber.

6. A mounting module (100) according to any of the previous claims, wherein the legs comprise openings (160) for fixing the mounting module (100) to the curved object with fixing means.

7. A mounting module (100) according to any of the previous claims, wherein the upper substrate (110) is a mechanical supporting substrate, e.g. for supporting one or more of a flexible display, one or more sensors, one or more sensor layers, one or more actuators, one or more input/output means, one or more electronic components or spacers.

8. A mounting module (100) according to any of the previous claims, wherein the upper substrate (110) comprises one or more of a flexible display, one or more sensors, one or more sensor layers, one or more actuators, one or more input/output means, one or more electronic components or spacers.

9. A mounting module (100) according to any of the previous claims, wherein the space in between the legs comprises one or more of signal connections, power connections, data connections, one or more electronic components such as for example driving electronics or communication components.

10. A mounting module (100) according to any of the previous claims, wherein the mounting module (100) furthermore comprises a fan for inducing air convection between the upper substrate (110) and the feet (140).

11. A mounting module (100) according to any of the previous claims, wherein the upper substrate (110) comprises through holes for any of cooling, feedthrough of electrical connections, feedthrough of data connections, etc.

12. A mounting module (100) according to any of the previous claims, wherein the curved object is an object having a convex surface.

13. A mounting module (100) according to any of the previous claims, wherein the upper substrate (110) comprises or supports a proximity sensing system.

14. A mechanical construction comprising a mounting module (100) according to any of the previous claims.

15. A mechanical construction according to claim 14, the mechanical construction being a robot.
